# FASCICULE DE BREVET EUROPEEN

(11) **EP 3 004 778 B1**
(45) Date de publication et mention de la délivrance du brevet: **29.03.2017**
(21) Numéro de dépôt: 14725118.5
(22) Date de dépôt: 15.05.2014
(51) Int. Cl.: F28F 9/02, B60H 1/32, F25B 39/02, F25B 41/06, F28F 27/02

(54) **MODULE DE CONNEXION, ECHANGEUR THERMIQUE, ET ENSEMBLE D'ECHANGE THERMIQUE CORRESPONDANT**
ANSCHLUSSMODUL, WÄRMETAUSCHER UND ZUGEHÖRIGE WÄRMETAUSCHENDE ANORDNUNG
CONNECTION MODULE, HEAT EXCHANGER, AND CORRESPONDING HEAT-EXCHANGING ASSEMBLY

(30) Priorité: 07.06.2013 FR 1355269
(43) Date de publication de la demande: 13.04.2016
(73) Titulaire: Valeo Systemes Thermiques, 78320 Le Mesnil-Saint-Denis Cedex (FR)
(72) Inventeur: DENOUAL, Christophe, F-72430 Noyen-sur-sarthe (FR)
(74) Mandataire: Metz, Gaëlle
(86) Numéro de dépôt international: PCT/EP2014/060028
(87) Numéro de publication internationale: WO 2014/195108

(56) Documents cités:
- DE-A1-102010 012 869
- DE-A1-102010 055 613

## Description

La présente invention est du domaine des échangeurs thermiques utilisés dans un véhicule automobile. L'invention concerne un module de connexion pour un échangeur thermique conforme au préambule de la revendication 1 permettant notamment de connecter l'échangeur thermique à un composant d'un circuit de fluide tel qu'un détendeur.

Un tel module est connu du document DE 10 2010 055613A1.

L'invention concerne aussi un échangeur thermique comportant un tel module de connexion.

L'invention concerne encore un ensemble d'échange thermique comprenant l'échangeur thermique avec un tel module de connexion ainsi que le composant d'un circuit de fluide tel qu'un détendeur auquel est connecté l'échangeur thermique.

Plus particulièrement, l'invention vise un échangeur entre un premier fluide tel qu'un fluide caloporteur, et un deuxième fluide tel qu'un fluide réfrigérant, en vue de refroidir le fluide caloporteur, par exemple un liquide de refroidissement, assurant le refroidissement d'un composant électrique et/ou électronique du véhicule, tel qu'une batterie.

Un tel échangeur est par exemple agencé dans une boucle de climatisation d'une installation de chauffage, de ventilation et/ou de climatisation d'un véhicule automobile électrique ou hybride.

En effet, un véhicule automobile est couramment équipé d'une installation de ventilation, de chauffage et/ou de climatisation pour modifier l'air contenu à l'intérieur de l'habitacle du véhicule en délivrant un flux d'air conditionné à l'intérieur de l'habitacle. Une telle installation comprend généralement une boucle de climatisation à l'intérieur de laquelle circule un fluide réfrigérant.

De façon traditionnelle, la boucle de climatisation comprend un compresseur propre à élever la pression du fluide réfrigérant à l'état gazeux, un condenseur propre à condenser le fluide réfrigérant comprimé par le compresseur et à le sous-refroidir à l'état liquide, un organe de détente propre à abaisser la pression et la température du fluide réfrigérant, et un évaporateur propre à faire passer le fluide réfrigérant après détente de l'état liquide à l'état gazeux avant son retour au compresseur. L'organe de détente peut à titre d'exemple être un détendeur thermostatique ou encore un orifice calibré.

Selon un mode de réalisation connu, l'évaporateur permet un transfert thermique entre le fluide réfrigérant et le fluide caloporteur, de façon à refroidir le fluide caloporteur. Le fluide caloporteur étant par exemple un liquide de refroidissement tel que de l'eau glycolée, on parle dans ce cas d'évaporateur à eau.

L'organe de détente est prévu en amont de l'évaporateur selon le sens de circulation du fluide réfrigérant pour abaisser la pression et la température du fluide réfrigérant avant évaporation.

Selon certaines solutions de l'art antérieur, un capteur peut être prévu, tel qu'un capteur de température ou de pression du fluide réfrigérant, de façon à mesurer une grandeur physique, pression ou température, du fluide réfrigérant après détente entrant dans l'évaporateur à eau.

Cette mesure permet notamment de contrôler, par exemple dans le cas d'un détendeur piloté par une électrovanne, que l'électrovanne est ouverte, permettant la détente du fluide réfrigérant et son passage dans l'évaporateur à eau.

Il est courant de prévoir un bloc de connexion monobloc pour permettre la connexion de l'évaporateur à eau à l'organe de détente, et ce bloc de connexion porte également le capteur de température ou de pression du fluide réfrigérant.

Ce bloc de connexion est généralement brasé à l'échangeur thermique, tel que l'évaporateur à eau.

Par ailleurs, les échangeurs connus à ce jour sont conçus et développés en fonction de cahiers des charges imposés par le constructeur du véhicule dans lequel est monté l'échangeur thermique.

Une majorité des composants constitutifs de l'échangeur est généralement identique d'un constructeur à l'autre, ou d'un véhicule appartenant à une gamme à l'autre, et seule une part souvent minoritaire est variable, c'est-à-dire spécifique à l'application.

Il peut s'agir bien souvent du capteur de pression ou de température du fluide réfrigérant après détente entrant dans l'évaporateur à eau.

Comme les composants des échangeurs thermiques sont en général pré-assemblés avant d'être rendus solidaires par brasage en une seule étape de fabrication, il est nécessaire de gérer en amont la logistique relative à la variabilité de ces échangeurs, afin de les adapter à la demande de chaque constructeur. Dans ce cas, le bloc de connexion portant le capteur de pression ou de température doit être adapté selon les véhicules dans lequel il doit être intégré.

Le but de la présente invention est de résoudre les inconvénients décrits ci-dessus principalement permettant un échangeur thermique adaptable à plusieurs configurations de montage sur véhicule.

À cet effet, l'invention a pour objet un module de connexion d'un échangeur thermique entre un premier fluide et un deuxième fluide notamment pour véhicule automobile, le module de connexion étant configuré pour connecter l'échangeur thermique à un composant d'un circuit de fluide et pour porter un capteur apte à mesurer une grandeur du fluide en sortie du composant injecté dans l'échangeur thermique,
caractérisé en ce que le module de connexion comporte :
- au moins deux pièces de fixation, dont une première pièce de fixation agencée selon un axe défini et apte à former un support mécanique pour le composant, et une deuxième pièce de fixation apte à porter le capteur, et
- des moyens d'assemblage complémentaires portés d'une part par la première pièce de fixation et d'autre part par la deuxième pièce de fixation, permettant un assemblage de la deuxième pièce de fixation à la première pièce de fixation selon au moins deux orientations de la deuxième pièce de fixation par rapport à l'axe la première pièce de fixation.

Ainsi, la deuxième pièce de fixation peut s'étendre selon le même axe que la première pièce de fixation ou selon un axe formant un angle non nul avec l'axe de la première pièce de fixation.

La première pièce de fixation fait office de référence pour l'orientation de la deuxième pièce de fixation.

Le capteur d'une grandeur physique du fluide peut alors être orienté différemment selon l'assemblage de la deuxième pièce de fixation à la première pièce de fixation.

Cette orientation adaptable du capteur est donc possible à l'aide d'un module de connexion standard.

Selon le véhicule dans lequel l'échangeur thermique et son module de connexion doivent être intégrés, il suffit de prévoir en conséquence l'orientation de la deuxième pièce de fixation portant le capteur avant la solidarisation de l'ensemble.

Ledit module de connexion peut en outre comporter une ou plusieurs caractéristiques suivantes, prises séparément ou en combinaison :
- les deux pièces de fixation présentent des formes complémentaires,
- la deuxième pièce de fixation présente une portion de forme sensiblement cylindrique apte à coopérer avec la première pièce de fixation et la première pièce de fixation présente une surface sensiblement concave en vis-à-vis de la deuxième pièce de fixation,
- la première pièce de fixation présente un premier moyen d'assemblage et la deuxième pièce de fixation présente une pluralité de seconds moyens d'assemblage complémentaires du premier moyen d'assemblage et s'étendant selon au moins deux orientations différentes par rapport à l'axe de la première pièce de fixation. La pluralité des seconds moyens d'assemblage prévus sur la deuxième pièce de fixation offre une grande flexibilité de l'orientation de la deuxième pièce de fixation et donc du capteur porté par la deuxième pièce de fixation,
- les moyens d'assemblage sont prévus sur les pourtours extérieurs de la première pièce de fixation et de la deuxième pièce de fixation,
- les moyens d'assemblage comportent au moins une nervure et une rainure complémentaires,
- la première pièce de fixation présente une nervure et la deuxième pièce de fixation présente une pluralité de rainures complémentaires de la nervure pour l'assemblage des deux pièces de fixation.

L'invention concerne également un échangeur thermique entre un premier fluide et un deuxième fluide notamment pour véhicule automobile comprenant un module de connexion tel que défini précédemment.

Selon un aspect de l'invention, l'échangeur thermique comprend un faisceau d'échange thermique comportant un premier ensemble de tubes et un second ensemble de tubes en contact thermique l'un avec l'autre, ledit premier ensemble de tubes étant apte à être relié à un circuit de refroidissement d'un composant électrique et/ou électronique dudit véhicule, tel qu'une batterie, dans lequel circule le premier fluide qui est du type d'un fluide caloporteur, et ledit second ensemble de tubes étant apte à être relié au circuit de climatisation dudit véhicule dans lequel circule le deuxième fluide qui est du type d'un fluide réfrigérant.

Selon un mode de réalisation particulier, l'échangeur thermique comprend un faisceau d'échange thermique présentant une forme générale sensiblement parallélépipédique et l'axe de la première pièce de fixation est sensiblement parallèle à la largeur du faisceau d'échange thermique.

Selon un autre aspect de l'invention, l'échangeur thermique est du type d'un évaporateur à eau dans lequel le fluide caloporteur comportant de l'eau additionnée de glycol, ainsi que le fluide réfrigérant sont aptes à circuler.

L'invention concerne aussi un ensemble d'échange thermique comprenant un tel échangeur thermique comportant un module de connexion et un composant connecté à l'échangeur thermique.

Selon un aspect de l'invention, le composant est un organe de détente apte à abaisser la pression et la température du fluide, tel qu'un détendeur thermostatique. Le composant peut comprendre une électrovanne de pilotage.

Selon un autre aspect de l'invention, le capteur est un capteur de température ou un capteur de pression.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue en perspective d'un échangeur thermique selon un premier mode de réalisation de l'invention,
- la figure 2 est une vue en perspective de l'échangeur thermique selon un deuxième mode de réalisation de l'invention,
- la figure 3 est une vue éclatée d'un module de connexion permettant de connecter l'échangeur thermique à un composant d'un circuit de fluide externe à l'échangeur thermique,
- la figure 4 est une vue assemblée du module de connexion selon une première variante de réalisation avec une pièce du module de connexion selon une première orientation,
- la figure 5 est une vue assemblée du module de connexion selon une deuxième variante de réalisation avec une pièce du module de connexion selon une deuxième orientation,
- la figure 6 est une vue assemblée du module de connexion selon une troisième variante de réalisation avec une pièce du module de connexion selon une troisième orientation,
- la figure 7 est une vue représentant le module de connexion auquel est fixé un composant d'un circuit de fluide externe à l'échangeur thermique et un capteur d'une grandeur du fluide.

Dans ces figures, les éléments sensiblement identiques portent les mêmes références.

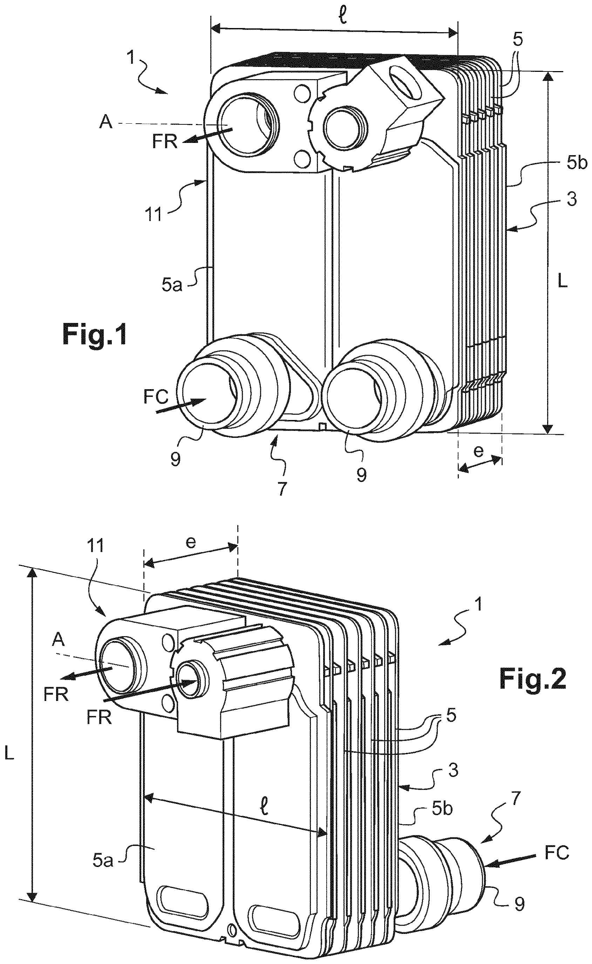

La figure 1 illustre un mode de réalisation de l'échangeur thermique 1 selon l'invention. L'échangeur thermique 1 est destiné à mettre en oeuvre un transfert thermique entre un premier fluide et un deuxième fluide.

Selon un exemple de réalisation, l'échangeur thermique 1 est plus particulièrement destiné à réaliser un échange thermique entre un fluide réfrigérant *FR,* par exemple connu sous le sigle R134a ou encore du dioxyde de carbone, et un fluide caloporteur *FC* tel que de l'eau additionnée de glycol, servant de liquide de refroidissement par exemple d'une batterie du véhicule.

Le fluide réfrigérant *FR* peut être sous forme gazeuse, liquide ou diphasique.

Le premier fluide est par exemple le fluide caloporteur, et le deuxième fluide est par exemple le fluide réfrigérant *FR.*

L'échangeur thermique 1 est selon un mode de réalisation préféré un évaporateur. Le fluide caloporteur *FC* comprenant par exemple de l'eau glycolée, on parle d'évaporateur à eau ou « chiller » en anglais.

L'échangeur thermique 1 comprend un faisceau d'échange thermique 3 dans lequel s'opère un transfert thermique entre le premier fluide et le deuxième fluide.

En référence à l'exemple de la figure 1, le faisceau d'échange thermique 3 peut présenter une forme générale sensiblement parallélépipédique avec une largeur *l*, une longueur *L*, et une épaisseur *e*.

Le faisceau d'échange thermique 3 comporte un premier ensemble de tubes et un second ensemble de tubes.

Selon un mode de réalisation, le premier ensemble de tubes est prévu pour la circulation du premier fluide et le second ensemble de tubes est prévu pour la circulation du deuxième fluide.

Selon un exemple de réalisation, l'échangeur thermique 1 comprend une alternance de tubes du premier ensemble de tubes et de tubes du second ensemble de tubes.

Le premier ensemble de tubes et le second ensemble de tubes sont destinés à être en contact thermique l'un avec l'autre. Ainsi, dans le faisceau d'échange thermique 3, le premier fluide circulant dans le premier ensemble de tubes et le deuxième fluide circulant dans le second ensemble de tubes, sont rapprochés pour favoriser le transfert de calories d'un fluide vers l'autre. Le premier ensemble de tubes et le second ensemble de tubes peuvent être définis par un empilement de plaques 5, 5a, 5b.

L'empilement des plaques se fait par exemple selon l'épaisseur *e* de l'échangeur thermique 1 entre une première plaque d'extrémité 5a et une deuxième plaque d'extrémité 5b. La deuxième plaque d'extrémité 5b est opposée à la première plaque d'extrémité 5a par rapport à la pluralité de tubes du premier et du second ensembles de tubes du faisceau d'échange thermique 3.

Les plaques 5, 5a, 5b sont par exemple respectivement de forme sensiblement rectangulaire dont la largeur définit la largeur *l* du faisceau d'échange thermique 3 et dont la longueur définit la longueur *L* du faisceau d'échange thermique 3.

Les plaques 5, 5a, 5b sont conformées de façon à permettre une communication de fluide entre les tubes du premier ensemble de tubes d'une part et entre les tubes du second ensemble de tubes d'autre part. Les plaques 5, 5a, 5b peuvent présenter à cet effet au moins un trou traversant autorisant la circulation du premier ou du deuxième fluide.

On peut en outre prévoir d'agencer dans les tubes du premier et/ou second ensemble de tubes un perturbateur dont la fonction est de perturber la circulation du premier ou du deuxième fluide afin de favoriser l'échange thermique. Il peut s'agir d'une ailette de perturbation de forme sensiblement ondulée.

En outre, le premier ensemble de tubes est apte à être relié à un circuit de fluide externe à l'échangeur thermique 1, par exemple un circuit de refroidissement d'un composant électrique et/ou électronique du véhicule tel qu'une batterie, dans lequel circule selon le mode de réalisation décrit le premier fluide.

La connexion entre le premier ensemble de tubes et le circuit de refroidissement d'un composant électrique et/ou électronique du véhicule tel qu'une batterie, peut être réalisée par l'intermédiaire d'un dispositif de raccordement 7. La fonction de ce dispositif de raccordement 7 est de mettre en oeuvre la circulation du premier fluide entre au moins un des tubes du premier ensemble de tubes de l'échangeur thermique 1 et le circuit de refroidissement dans lequel circule le premier fluide.

Selon l'exemple de la figure 1, le dispositif de raccordement 7 est installé sur une plaque d'extrémité, par exemple la première plaque d'extrémité 5a de l'échangeur thermique 1. Le dispositif de raccordement 7 peut comprendre deux tubulures 9 pour l'entrée du fluide caloporteur *FC* dans le faisceau d'échange thermique 3 pour une circulation dans le premier ensemble de tubes et pour la sortie du fluide caloporteur *FC*.Le second ensemble de tubes est apte à être relié à un second circuit externe, par exemple un circuit de climatisation du véhicule dans lequel circule le second fluide qui est du type d'un fluide réfrigérant FR.

La connexion entre le second ensemble de tubes et le circuit de climatisation est réalisée par l'intermédiaire d'un module de connexion 11 agencé également sur la première plaque d'extrémité 5a ou sur la deuxième plaque d'extrémité 5b du faisceau d'échange thermique 3.

Dans l'exemple de réalisation de la figure 1, le module de connexion 11 peut être agencé du même côté que celui recevant le dispositif de raccordement 7, par exemple du côté de la première plaque d'extrémité 5a.

Dans l'exemple de réalisation de la figure 2, le module de connexion 11 peut être agencé du côté du faisceau d'échange thermique 3 opposé au côté recevant le dispositif de raccordement 7, par exemple le module de connexion 11 est agencé sur la première plaque d'extrémité 5a, et le dispositif de raccordement 7 est agencé sur la deuxième plaque d'extrémité 5b.

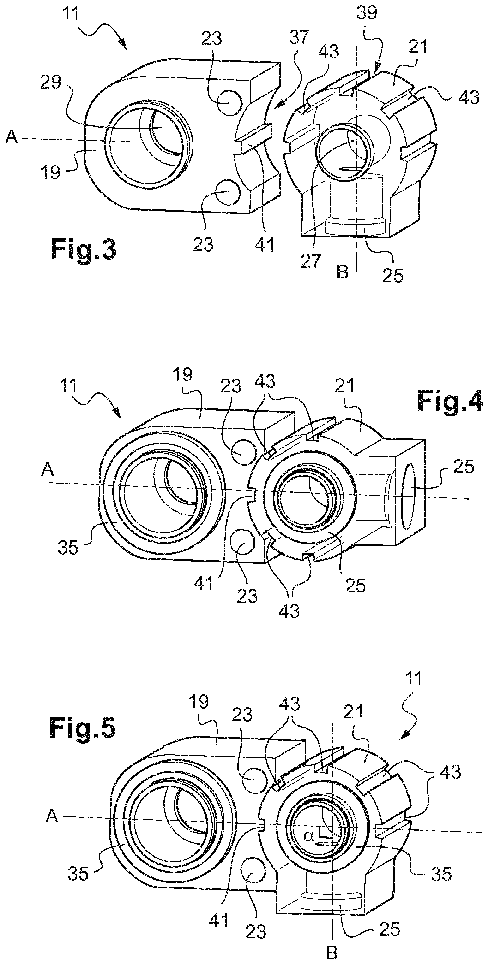

Un tel module de connexion 11 est représenté sur les figures 3 à 6.

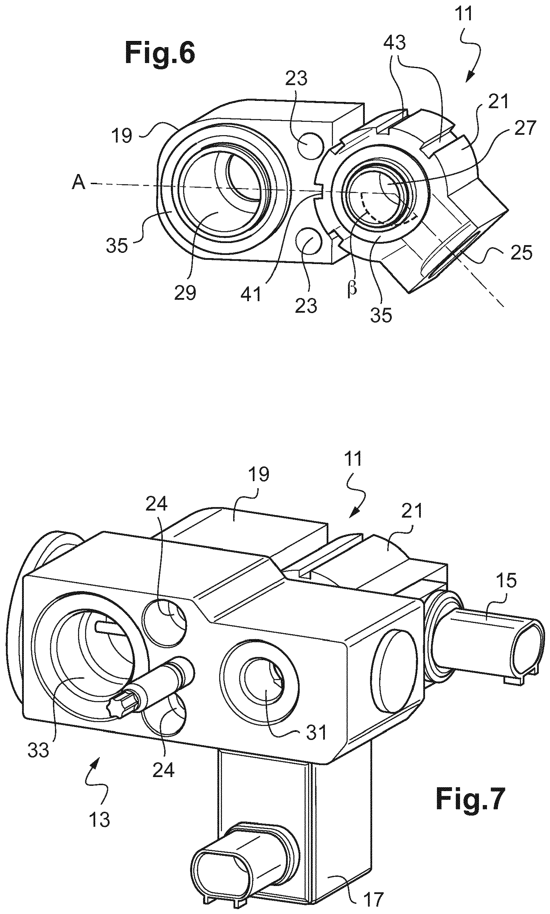

En référence à la figure 7, le module de connexion 11 permet d'une part de connecter un composant 13 du circuit de fluide réfrigérant à l'échangeur thermique 1 et est d'autre part apte à porter un capteur 15 destiné à capter une grandeur physique du deuxième fluide, ici le fluide réfrigérant *FR,* provenant du composant 13 connecté à l'échangeur thermique 1 injecté dans le second ensemble de tubes.

Le composant 13 du circuit de fluide réfrigérant apte à être solidarisé à l'échangeur, par l'intermédiaire du module de connexion 11, est par exemple un organe de détente, tel qu'un détendeur thermostatique 13.

Un tel détendeur thermostatique 13 est un des composants essentiels au fonctionnement du cycle thermodynamique qui prend place dans le circuit de fluide réfrigérant avec lequel l'échangeur thermique 1 coopère. Le détendeur thermostatique 13 assure un abaissement de la pression du second fluide, ici le fluide réfrigérant *FR,* avant d'entrer dans le second ensemble de tubes. Un tel abaissement se traduit par un refroidissement du premier fluide qui circule dans le premier ensemble de tubes par échange thermique avec le second fluide.

Selon une variante représentée sur la figure 7, le détendeur thermostatique 13 est pourvu d'une vanne 17, en particulier une électrovanne 17. On comprend ici que le détendeur thermostatique 13 est piloté électriquement par l'électrovanne 17. Ainsi, le niveau d'abaissement de la pression opéré par le détendeur thermostatique 13 est placé sous la dépendance d'un dispositif de contrôle externe qui agit sur l'électrovanne 17.

Le capteur 15 est par exemple apte à capter la température ou la pression du deuxième fluide, dans l'exemple décrit le fluide réfrigérant FR.

En se référant de nouveau aux figures 3 à 6, le module de connexion 11 présente une structure modulaire.

Plus précisément, le module de connexion 11 comporte au moins deux pièces de fixation 19, 21 complémentaires et permettant d'orienter le capteur 15 selon au moins deux orientations différentes par rapport à une orientation prédéfinie d'une des pièces de fixation 19, 21.

Pour ce faire, le module de connexion 11 comporte une première pièce de fixation 19 dite de référence apte à être agencée selon une orientation prédéfinie, dans l'exemple illustré selon un axe *A*. La deuxième pièce de fixation 21 est dans ce cas une pièce dite ajustable dont l'orientation peut être adaptée par rapport à celle de la première pièce de fixation 19.

Les deux pièces de fixation 19, 21 sont par exemple réalisées par extrusion et usinage ou encore peuvent être complètement usinées.

Selon le mode de réalisation décrit, la pièce de fixation 19 permet la connexion du composant 13 du circuit de fluide réfrigérant à l'échangeur thermique 1 et la deuxième pièce de fixation 21 est prévue pour porter le capteur 15.

À cet effet, la première pièce de fixation 19 comporte des moyens de fixation 23 du composant 13 du circuit de fluide réfrigérant tel que le détendeur thermostatique 13. Dans l'exemple illustré, la première pièce de fixation 19 présente des orifices 23 de passage pour des vis de fixation par exemple. Le composant 13 du circuit de fluide réfrigérant, tel qu'un détendeur thermostatique 13, comporte dans ce cas des orifices 24 complémentaires pour le passage de ces vis de fixation (voir figure 7).

La première pièce de fixation 19 forme donc un support mécanique pour le composant 13 du circuit de fluide réfrigérant, tel que le détendeur thermostatique 13, devant être relié à l'échangeur thermique 1.

Selon l'exemple illustré sur les figures 3 à 7, la deuxième pièce de fixation 21 présente quant à elle un logement 25 apte à recevoir le capteur 15 et dans lequel le capteur 15 est fixé. C'est la deuxième pièce de fixation 21 qui forme un support mécanique pour le capteur 15.

En outre, le module de connexion 11 permet une connexion fluidique entre l'échangeur thermique 1 et le composant 13 du circuit de fluide réfrigérant, tel que le détendeur thermostatique 13.

À cet effet, le module de connexion 11 présente au moins un orifice d'entrée 27 par lequel le fluide réfrigérant *FR* dans l'exemple décrit provenant du composant tel que le détendeur thermostatique 13 est injecté dans au moins un tube du second ensemble de tubes du faisceau d'échange thermique 3 et un orifice de sortie 29 par lequel le fluide réfrigérant *FR* ayant circulé dans le second ensemble de tubes du faisceau d'échange thermique 3 est évacué hors de l'échangeur thermique 1.

L'orifice d'entrée 27 sur le module de connexion 11 est destiné à être agencé en vis-à-vis d'un orifice d'entrée 31 prévu sur le composant 13 du circuit de fluide réfrigérant, tel que le détendeur thermostatique 13, par lequel le fluide réfrigérant à haute pression est injecté dans le composant 13. L'orifice d'entrée 27 est également destiné à être agencé en vis-à-vis d'un orifice d'entrée prévu sur la plaque d'extrémité 5a, 5b non visible sur les figures. Ainsi, le second fluide, ici le fluide réfrigérant *FR,* ayant par exemple subi une détente au sien du détendeur thermostatique 13 peut circuler vers le second ensemble de tubes pour un transfert thermique avec le premier fluide circulant dans le premier ensemble de tubes.

De même, l'orifice de sortie 29 sur le module de connexion 11 est destiné à être agencé en vis-à-vis d'un orifice de sortie prévu sur la plaque d'extrémité 5a, 5b non visible sur les figures. L'orifice de sortie 29 est également destiné à être agencé en vis-à-vis d'un orifice de sortie 33 prévu sur le composant 13 du circuit de fluide réfrigérant, tel que le détendeur thermostatique 13, par lequel le fluide réfrigérant *FR* basse pression est aspiré vers le compresseur (non représenté) du circuit de fluide réfrigérant.

Cet agencement permet l'évacuation du fluide réfrigérant *FR* ayant circulé dans le faisceau d'échange thermique 3 de l'échangeur thermique 1 vers le circuit de fluide réfrigérant pour une compression afin de recommencer un cycle réfrigérant.

Selon l'exemple illustré, l'orifice d'entrée 27 est agencé sur la deuxième pièce de fixation 21 et l'orifice de sortie 29 est agencé sur la première pièce de fixation 19. Bien entendu, l'inverse est également possible.

Par ailleurs, un joint d'étanchéité 35 représenté sur les figures 4 à 6, est avantageusement agencé autour des orifices d'entrée et de sortie 27, 29 du module de connexion 11. Il peut s'agir à titre d'exemple non limitatif de joints toriques 35 dits « O-ring » en anglais, agencés autour des orifices d'entrée et de sortie 27, 29. Les joints d'étanchéité 35 assurent une connexion étanche avec le composant 13 du circuit de fluide réfrigérant, tel que le détendeur thermostatique 13.

En outre, les deux pièces de fixation 19 et 21 sont agencées adjacentes.

La première pièce de fixation 19 et la deuxième pièce de fixation 21 sont de formes complémentaires.

En référence à la figure 3, à titre d'exemple la deuxième pièce de fixation 21 peut présenter une portion de forme sensiblement cylindrique, par exemple la partie supérieure selon l'orientation sur la figure 3. La première pièce de fixation 19 peut présenter une surface concave complémentaire de la forme cylindrique de la deuxième pièce de fixation 21. La surface concave de la première pièce de fixation 19 est agencée en vis-à-vis de la deuxième pièce de fixation 21, plus précisément de la portion sensiblement cylindrique de la deuxième pièce de fixation 21.

La première pièce de fixation 19 est par exemple agencée sur une plaque d'extrémité 5a du faisceau d'échange thermique 3 en s'étendant selon un axe *A* sensiblement parallèle à la largeur *l* des plaques 5, 5a, 5b formant le faisceau d'échange thermique 3 (voir figures 1 et 2).

En outre, en se référant de nouveau à la figure 3, le module de connexion 11 comprend des moyens d'assemblage 37, 39 complémentaires et aptes à coopérer pour l'assemblage des deux pièces de fixation 19, 21 entre elles, plus précisément pour imbriquer les deux pièces de fixation 19, 21, selon au moins deux orientations de la deuxième pièce de fixation 21 par rapport à l'axe *A* de la première pièce de fixation 19.

La première pièce de fixation 19 présente un premier moyen d'assemblage 37 et la deuxième pièce de fixation 21 présente une pluralité de seconds moyens d'assemblage 39.

Les seconds moyens d'assemblage 39 sont complémentaires du premier moyen d'assemblage 37 et s'étendent selon au moins deux orientations différentes par rapport à l'axe *A* de la première pièce de fixation 19, de manière à permettre au moins deux orientations différentes de la deuxième pièce de fixation 21 par rapport à la première pièce de fixation 19.

Selon le mode de réalisation illustré sur les figures 3 à 6, les moyens d'assemblage 37, 39 sont prévus sur les pourtours extérieurs de la première pièce de fixation 19 et de la deuxième pièce de fixation 21.

En outre, les moyens d'assemblage 37, 39 peuvent être conformés pour un assemblage par complémentarité de forme entre la première pièce de fixation 19 et la deuxième pièce de fixation 21.

Les moyens d'assemblage 37, 39 sont par exemple des moyens d'emboîtement de type mâle-femelle.

À titre d'exemple, les moyens d'assemblage 37, 39 comportent au moins une nervure 41 et une rainure 43 complémentaires.

Selon l'exemple illustré sur les figures 3 à 6, la première pièce de fixation 19 présente une nervure 41 et la deuxième pièce de fixation 21 présente une pluralité de rainures 43 complémentaires de la nervure 41.

Ainsi, selon cet exemple le premier moyen d'assemblage 37 comprend une nervure 41 et les seconds moyens d'assemblage comportent une pluralité de rainures 43.

La nervure 41 peut présenter par exemple une forme de queue d'aronde. La forme des rainures 43 est complémentaire dans ce cas de la forme en queue d'aronde.

Les rainures 43 peuvent être espacées selon un pas prédéfini régulier ou non.

La pluralité de rainures 43 permet de définir une pluralité de crans pour l'assemblage des deux pièces de fixation 19, 21. La nervure 41 de la première pièce de fixation 19 peut s'engager dans l'une quelconque des rainures 43 prévues sur la deuxième pièce de fixation 21 selon l'orientation voulue du capteur 15.

On peut prévoir en variante que le premier moyen d'assemblage comporte une rainure 43 et que les seconds moyens d'assemblage comportent une pluralité de nervures 41.

Dans l'exemple décrit l'orientation du capteur 15 est donnée par l'orientation de la deuxième pièce de fixation 21. En effet, comme cela est mieux visible sur la figure 7, le capteur 15 une fois fixé à la deuxième pièce de fixation 21 s'étend selon la même direction que la deuxième de fixation 21.

L'orientation du capteur 15 est choisie notamment en fonction de l'encombrement dans le véhicule afin de faciliter son intégration dans le véhicule.

Dans l'exemple illustré sur la figure 4, la deuxième pièce de fixation 21 s'étend selon la même direction que la première pièce de fixation 19, à savoir dans cet exemple selon l'axe *A* parallèle à la largeur *l* du faisceau d'échange thermique 3. Le capteur 15 assemblé sur la deuxième pièce de fixation 21 s'étend alors selon cette direction sensiblement parallèle à la largeur *l* du faisceau d'échange thermique 3.

Dans l'exemple de la figure 5, la deuxième pièce de fixation 21 s'étend selon un deuxième axe *B* distinct du premier axe *A* selon lequel la première pièce de fixation 19. Ce deuxième axe *B* forme un angle α non nul avec le premier axe *A.* Dans l'exemple illustré, le deuxième axe *B* est sensiblement parallèle à la longueur *L* du faisceau d'échange thermique 3, donc selon une direction sensiblement perpendiculaire à la direction de la première pièce de fixation 19. Le capteur 15 assemblé sur la deuxième pièce de fixation 21 s'étend alors selon cette direction sensiblement parallèle à la longueur *L* du faisceau d'échange thermique 3.

Dans l'exemple de la figure 6, la deuxième pièce de fixation 21 s'étend selon une direction oblique par rapport à la direction selon laquelle la première pièce de fixation 19 s'étend, ici sensiblement parallèle à la largeur *l* du faisceau d'échange thermique 3. Ainsi, la deuxième pièce de fixation 21 s'étend selon un deuxième axe *C* formant un angle P non nul avec le premier axe *A* de direction de la première pièce de fixation 19.

Le capteur 15 assemblé sur la deuxième pièce de fixation 21 s'étend alors selon cette direction oblique par rapport à la largeur *l* du faisceau d'échange thermique 3.

L'angle d'inclinaison α, β de la deuxième pièce de fixation 21 par rapport à la première pièce de fixation 19 dite de référence, peut être adapté selon l'imbrication des moyens d'assemblage 37, 39 portés d'une part par la première pièce de fixation 19 et d'autre part par la deuxième pièce de fixation 21.

Bien entendu, on peut prévoir plus d'une nervure 41 sur la première pièce de fixation 19 pour la coopération avec les rainures 43 sur la deuxième pièce de fixation 21.

On peut aussi prévoir qu'une ou plusieurs rainures 43 soient prévues sur la première pièce de fixation 19 et qu'une ou plusieurs nervures 41 soient prévues sur la deuxième pièce de fixation 21.

Les deux pièces de fixation 19, 21 peuvent ainsi être pré-assemblées sur une plaque d'extrémité 5a ou 5b et l'ensemble comprenant le faisceau d'échange thermique 3, le module de connexion 11, et éventuellement le dispositif de raccordement 7, peut être solidarisé par passage dans un four de brasage.

On peut prévoir à cet effet des moyens de pré-assemblage pour le maintien des pièces de fixation du module de connexion 11 entre elles et sur la plaque d'extrémité 5a ou 5b du faisceau d'échange thermique 3 avant le brasage.

Enfin, l'échangeur thermique 1 comprenant un tel module de connexion 11 et le composant 13 connecté à l'échangeur thermique 1, forment un ensemble d'échange thermique apte à être intégré dans un véhicule automobile. L'échangeur thermique étant en connexion avec un circuit d'un premier fluide dit fluide caloporteur *FC,* tel que le liquide de refroidissement, et étant également en connexion avec le circuit du deuxième fluide, le fluide réfrigérant *FR* dans l'exemple décrit, par le module de connexion 11 et le composant 13 du circuit de fluide réfrigérant.

Ainsi, le composant du circuit de fluide réfrigérant tel que le détendeur thermostatique 13 n'est plus connecté à l'échangeur thermique 1 via un bloc de connexion monobloc comme dans les solutions de l'art antérieur, mais par l'intermédiaire d'un module de connexion permettant une flexibilité dans l'orientation du capteur 15 apte à mesurer par exemple la température ou la pression du deuxième fluide *FR* injecté dans l'échangeur thermique 1.

La fonction de support du composant 13 du circuit de fluide réfrigérant, ici du détendeur thermostatique 13, et du capteur 15 est décomposée en deux à l'aide des deux pièces de fixation 19, 21 qui peuvent être assemblées entre elles avec une orientation différente de la pièce de fixation portant le capteur 15. Une première pièce de fixation 19 sert de référence pour l'orientation de la deuxième pièce de fixation 21 portant le capteur 15.

Les pièces de fixation 19, 21 forment ainsi un standard et c'est à l'assemblage entre les deux pièces de fixation 19, 21 que se réalise l'adaptation au véhicule dans lequel l'ensemble d'échange thermique sera intégré.

## Revendications

1. Module de connexion (11) d'un échangeur thermique (1) entre un premier fluide (*FC*) et un deuxième fluide (*FR*) notamment pour véhicule automobile, le module de connexion (11) étant configuré pour connecter l'échangeur thermique (1) à un composant (13) d'un circuit de fluide et pour porter un capteur (15) apte à mesurer une grandeur du fluide en sortie du composant (13) injecté dans l'échangeur thermique (1),
**caractérisé en ce que** le module de connexion (11) comporte :
- au moins deux pièces de fixation (19, 21), dont :
• une première pièce de fixation (19) agencée selon un axe (*A*) défini et apte à former un support mécanique pour le composant (13), et
• une deuxième pièce de fixation (21) apte à porter le capteur (15), et
- des moyens d'assemblage (37, 39) complémentaires portés d'une part par la première pièce de fixation (19) et d'autre part par la deuxième pièce de fixation (21), permettant un assemblage de la deuxième pièce de fixation (21) à la première pièce de fixation (19) selon au moins deux orientations de la deuxième pièce de fixation (21) par rapport à l'axe (*A*) la première pièce de fixation (19).

2. Module de connexion (11) selon la revendication 1, dans lequel les deux pièces de fixation (19, 21) présentent des formes complémentaires.

3. Module de connexion (11) selon la revendication 2, dans lequel la deuxième pièce de fixation (21) présente une portion de forme sensiblement cylindrique apte à coopérer avec la première pièce de fixation (19) et la première pièce de fixation (19) présente une surface sensiblement concave en vis-à-vis de la deuxième pièce de fixation (21).

4. Module de connexion (11) selon l'une quelconque des revendications précédentes, dans lequel la première pièce de fixation (19) présente un premier moyen d'assemblage (37) et la deuxième pièce de fixation (21) présente une pluralité de seconds moyens d'assemblage (39) complémentaires du premier moyen d'assemblage (37) et s'étendant selon au moins deux orientations différentes par rapport à l'axe (*A*) de la première pièce de fixation (19).

5. Module de connexion (11) selon l'une quelconque des revendications précédentes, dans lequel les moyens d'assemblage (37, 39) sont prévus sur les pourtours extérieurs de la première pièce de fixation (19) et de la deuxième pièce de fixation (21).

6. Module de connexion (11) selon l'une quelconque des revendications précédentes, dans lequel les moyens d'assemblage (37, 39) comportent au moins une nervure (41) et une rainure (43) complémentaires.

7. Module de connexion (11) selon la revendication 6, dans lequel la première pièce de fixation (19) présente une nervure (41) et la deuxième pièce de fixation (21) présente une pluralité de rainures (43) complémentaires de la nervure (41) pour l'assemblage des deux pièces de fixation (19, 21).

8. Échangeur thermique (1) entre un premier fluide (*FC*) et un deuxième fluide (*FR*) notamment pour véhicule automobile, **caractérisé en ce qu'**il comporte un module de connexion (11) conforme à l'une quelconque des revendications précédentes.

9. Échangeur thermique (1) selon la revendication 8, comprenant un faisceau d'échange thermique (3) comportant un premier ensemble de tubes et un second ensemble de tubes en contact thermique l'un avec l'autre,
- ledit premier ensemble de tubes étant apte à être relié à un circuit de refroidissement d'un composant électrique et/ou électronique dudit véhicule, tel qu'une batterie, dans lequel circule le premier fluide qui est du type d'un fluide caloporteur (*FC*), et
- ledit second ensemble de tubes étant apte à être relié au circuit de climatisation dudit véhicule dans lequel circule le deuxième fluide qui est du type d'un fluide réfrigérant (*FR*).

10. Échangeur thermique (1) selon l'une des revendications 8 ou 9, comprenant un faisceau d'échange thermique (3) présentant une forme générale sensiblement parallélépipédique et dans lequel l'axe (*A*) de la première pièce de fixation (19) est sensiblement parallèle à la largeur (*l*) du faisceau d'échange thermique (3).

11. Échangeur thermique (1) selon l'une quelconque des revendications 8 à 10, **caractérisé en ce qu'**il est du type d'un évaporateur à eau dans lequel le fluide caloporteur (*FC*) comportant de l'eau additionnée de glycol, ainsi que le fluide réfrigérant (*FR*) sont aptes à circuler.

12. Ensemble d'échange thermique comprenant un échangeur thermique (1) et un composant (13) d'un circuit de fluide, **caractérisé en ce que** l'échangeur thermique (1) est conforme à l'une quelconque des revendications 8 à 11.

13. Ensemble d'échange thermique selon la revendication 12, dans lequel le composant (13) est un organe de détente apte à abaisser la pression et la température du fluide, tel qu'un détendeur thermostatique.

14. Ensemble d'échange thermique selon l'une des revendications 12 ou 13, dans lequel le composant (13) comprend une électrovanne (17) de pilotage.

15. Ensemble d'échange thermique selon l'une quelconque des revendications 12 à 14, dans lequel le capteur (15) est un capteur de température ou un capteur de pression.

## Patentansprüche

1. Anschlussmodul (11) eines Wärmetauschers (1) zwischen einem ersten Fluid *(FC)* und einem zweiten Fluid *(FR),* insbesondere für ein Kraftfahrzeug, wobei das Anschlussmodul (11) dafür ausgestaltet ist, den Wärmetauscher (1) mit einer Komponente (13) eines Fluidkreislaufes zu verbinden und einen Messfühler (15) zu tragen, der in der Lage ist, eine Größe des Fluids am Ausgang der Komponente (13) zu messen, das in den Wärmetauscher (1) eingespritzt wird,
**dadurch gekennzeichnet, dass** das Anschlussmodul (11) Folgendes umfasst:
- mindestens zwei Befestigungsteile (19, 21), von denen:
• ein erstes Befestigungsteil (19) gemäß einer definierten Achse *(A)* angeordnet ist und das dazu in der Lage ist, eine mechanische Abstützung für die Komponente (13) auszubilden, und
• ein zweites Befestigungsteil (21) dazu in der Lage ist, den Messfühler (15) zu tragen, und
- komplementäre Montagemittel (37, 39), die einerseits durch das erste Befestigungsteil (19) und andererseits durch das zweite Befestigungsteil (21) getragen werden, wodurch eine Montage des zweiten Befestigungsteils (21) an dem ersten Befestigungsteil (19) in mindestens zwei Ausrichtungen des zweiten Befestigungsteils (21) im Verhältnis zu der Achse *(A)* des ersten Befestigungsteils (19) ermöglicht wird.

2. Anschlussmodul (11) nach Anspruch 1, wobei die beiden Befestigungsteile (19, 21) komplementäre Formen aufweisen.

3. Anschlussmodul (11) nach Anspruch 2, wobei das zweite Befestigungsteil (21) einen Abschnitt mit im Wesentlichen zylindrischer Form aufweist, der in der Lage ist, mit dem ersten Befestigungsteil (19) zusammenzuwirken, und das erste Befestigungsteil (19) eine im Wesentlichen konkave Oberfläche gegenüberliegend dem zweiten Befestigungsteil (21) aufweist.

4. Anschlussmodul (11) nach irgendeinem der vorhergehenden Ansprüche, wobei das erste Befestigungsteil (19) ein erstes Montagemittel (37) aufweist, und das zweite Befestigungsteil (21) eine Vielzahl von zu dem ersten Montagemittel (37) komplementären zweiten Montagemitteln (39) aufweist, die sich in mindestens zwei Ausrichtungen erstrecken, die im Verhältnis zu der Achse *(A)* des ersten Befestigungsteils (19) verschieden sind.

5. Anschlussmodul (11) nach irgendeinem der vorhergehenden Ansprüche, wobei die Montagemittel (37, 39) an den äußeren Umfängen des ersten Befestigungsteils (19) und des zweiten Befestigungsteils (21) vorgesehen sind.

6. Anschlussmodul (11) nach irgendeinem der vorhergehenden Ansprüche, wobei die Montagemittel (37, 39) mindestens eine komplementäre Rippe (41) und eine komplementäre Nut (43) umfassen.

7. Anschlussmodul (11) nach Anspruch 6, wobei das erste Befestigungsteil (19) eine Rippe (41) aufweist, und das zweite Befestigungsteil (21) eine Vielzahl von zu der Rippe (41) komplementären Nuten (43) für die Montage der beiden Befestigungsteile (19, 21) aufweist.

8. Wärmetauscher (1) zwischen einem ersten Fluid *(FC)* und einem zweiten Fluid *(FR)*, insbesondere für ein Kraftfahrzeug, **dadurch gekennzeichnet, dass** er ein Anschlussmodul (11) gemäß irgendeinem der vorhergehenden Ansprüche umfasst.

9. Wärmetauscher (1) nach Anspruch 8, aufweisend ein Wärmetauschbündel (3), das eine erste Rohreinheit und eine zweite Rohreinheit umfasst, die miteinander in thermischem Kontakt stehen,
- wobei die erste Rohreinheit in der Lage ist, an einen Kühlungskreislauf einer elektrischen und/oder elektronischen Komponente des Kraftfahrzeuges, wie beispielsweise eine Batterie, angeschlossen zu werden, in welchem das erste Fluid zirkuliert, das von der Art eines flüssigen Wärmeübertragungsmittels *(FC)* ist, und
- wobei die zweite Rohreinheit in der Lage ist, an den Klimatisierungskreislauf des Kraftfahrzeuges angeschlossen zu werden, in welchem das zweite Fluid zirkuliert, das von der Art eines flüssigen Kühlungsmittels *(FR)* ist.

10. Wärmetauscher (1) nach einem der Ansprüche 8 oder 9, ein Wärmetauschbündel (3) umfassend, das eine allgemeine im Wesentlichen trapezförmige Gestalt aufweist, und wobei die Achse *(A)* des ersten Befestigungsteils (19) im Wesentlichen parallel zu der Breite *(l)* des Wärmetauschbündels (3) verläuft.

11. Wärmetauscher (1) nach irgendeinem der Ansprüche 8 bis 10, **dadurch gekennzeichnet, dass** er von der Art eines Wasserverdampfers ist, in dem das flüssige Wärmeübertragungsmittel *(FC),* das Wasser, dem Glykol zugesetzt wird, umfasst, sowie das flüssige Kühlungsmittel *(FR)* in der Lage sind, zu zirkulieren.

12. Wärmetauscheinheit, umfassend einen Wärmetauscher (1) und eine Komponente (13) eines Fluidkreislaufes, **dadurch gekennzeichnet, dass** der Wärmetauscher (1) sich gemäß irgendeinem der Ansprüche 8 bis 11 darstellt.

13. Wärmetauscheinheit nach Anspruch 12, wobei es sich bei der Komponente (13) um ein Druckminderungselement handelt, das in der Lage ist, den Druck und die Temperatur des Fluids abzusenken, wie beispielsweise ein thermostatischer Druckminderer.

14. Wärmetauscheinheit nach einem der Ansprüche 12 oder 13, wobei die Komponente (13) ein elektromagnetisches Steuerungsventil (17) umfasst.

15. Wärmetauscheinheit nach irgendeinem der Ansprüche 12 bis 14, wobei es sich bei dem Messfühler (15) um einen Temperaturmessfühler oder einen Druckmessfühler handelt.

## Claims

1. Connection module (11) for a heat exchanger (1) between a first fluid (*FC*) and a second fluid (*FR*) notably for a motor vehicle, the connection module (11) being configured to connect the heat exchanger (1) to a component (13) of a fluid circuit and to bear a sensor (15) capable of measuring a fluid quantity at the output of the component (13) injected into the heat exchanger (1),
**characterized in that** the connection module (11) comprises:
- at least two fixing parts (19, 21), including:
• a first fixing part (19) arranged along a defined axis (*A*) and capable of forming a mechanical support for the component (13), and
• a second fixing part (21) capable of bearing the sensor (15), and
- complementary assembly means (37, 39) borne on the one hand by the first fixing part (19) and on the other hand by the second fixing part (21), allowing assembly of the second fixing part (21) with the first fixing part (19) according to at least two orientations of the second fixing part (21) relative to the axis (*A*) of the first fixing part (19).

2. Connection module (11) according to Claim 1, in which the two fixing parts (19, 21) have complementary forms.

3. Connection module (11) according to Claim 2, in which the second fixing part (21) has a portion of substantially cylindrical form capable of cooperating with the first fixing part (19) and the first fixing part (19) has a substantially concave surface facing the second fixing part (21).

4. Connection module (11) according to any one of the preceding claims, in which the first fixing part (19) has a first assembly means (37) and the second fixing part (21) has a plurality of second assembly means (39) complementing the first assembly means (37) and extending according to at least two different orientations relative to the axis (*A*) of the first fixing part (19).

5. Connection module (11) according to any one of the preceding claims, in which the assembly means (37, 39) are provided on the outer perimeters of the first fixing part (19) and of the second fixing part (21).

6. Connection module (11) according to any one of the preceding claims, in which the assembly means (37, 39) comprise at least one rib (41) and one groove (43) complementing one another.

7. Connection module (11) according to Claim 6, in which the first fixing part (19) has a rib (41) and the second fixing part (21) has a plurality of grooves (43) complementing the rib (41) for the assembly of the two fixing parts (19, 21).

8. Heat exchanger (1) between a first fluid (*FC*) and a second fluid (*FR*) notably for a motor vehicle, **characterized in that** it comprises a connection module (11) according to any one of the preceding claims.

9. Heat exchanger (1) according to Claim 8, comprising a heat exchange bundle (3) comprising a first set of tubes and a second set of tubes in thermal contact with one another,
- said first set of tubes being capable of being linked to a cooling circuit of an electrical and/or electronic component of said vehicle, such as a battery, in which circulates the first fluid which is of the type of a heat transfer fluid (*FC*), and
- said second set of tubes being capable of being linked to the air conditioning circuit of said vehicle in which circulates the second fluid which is of the type of a coolant (*FR*).

10. Heat exchanger (1) according to one of Claims 8 or 9, comprising a heat exchange bundle (3) having a generally substantially parallelepipedal form and in which the axis (*A*) of the first fixing part (19) is substantially parallel to the width (*l*) of the heat exchange bundle (3).

11. Heat exchanger (1) according to any one of Claims 8 to 10, **characterized in that** it is of the type of a water evaporator in which the heat transfer fluid (*FC*) comprising added glycol water, and the coolant (*FR*) are capable of circulating.

12. Heat exchange assembly comprising a heat exchanger (1) and a component (13) of a fluid circuit, **characterized in that** the heat exchanger (1) conforms to any one of Claims 8 to 11.

13. Heat exchange assembly according to Claim 12, in which the component (13) is an expansion member capable of lowering the pressure and the temperature of the fluid, such as a thermostatic expansion valve.

14. Heat exchange assembly according to one of Claims 12 or 13, in which the component (13) comprises a driving solenoid valve (17).

15. Heat exchange assembly according to any one of Claims 12 to 14, in which the sensor (15) is a temperature sensor or a pressure sensor.
